# EUROPÄISCHE PATENTSCHRIFT

(11) **EP 0 665 144 B1**
(45) Veröffentlichungstag und Bekanntmachung des Hinweises auf die Patenterteilung: **29.01.1997**
(21) Anmeldenummer: 94119375.7
(22) Anmeldetag: 08.12.1994
(51) Int. Cl.: B60S 3/04

(54) **Fahrzeug-Trocknungs- oder Poliervorrichtung**
Drying or polishing apparatus for motor vehicles
Dispositif de séchage ou de lustrage pour véhicules automobiles

(30) Priorität: 27.01.1994 DE 4402332
(43) Veröffentlichungstag der Anmeldung: 02.08.1995
(73) Patentinhaber: WESUMAT Fahrzeugwaschanlagen GmbH, D-86156 Augsburg (DE)
(72) Erfinder: Decker, Wolfgang, D-86441 Zusamrshausen-Wollbach (DE)
(74) Vertreter: Liebau, Gerhard, Dipl.-Ing.

(56) Entgegenhaltungen:
- EP-A- 0 546 282
- DE-C- 3 837 928

## Beschreibung

Die Erfindung betrifft eine Fahrzeug-Trocknungs- oder Poliervorrichtung mit einer das Fahrzeug relativ zur Vorrichtung bewegenden Einrichtung, mit einem in einer horizontalen Ebene oberhalb der Bewegungsbahn des Fahrzeuges über mehrere sich um vertikale Achsen drehende, an beiden Längsseiten der Vorrichtung angeordnete Umlenkräder geführtes, biegsames, antreibbares, endloses Förderglied und mit einer Vielzahl von mit diesem verbundenen, senkrecht herunterhängenden schmalen Streifen aus saugfähigem Material, wie Textilien, Schaumstoff, Leder und lederähnlichem Kunststoff, die mittels des Fördergliedes quer zur relativen Bewegungsbahn des Fahrzeuges bewegbar sind (siehe DE-A-38 37 928).

Derartige Vorrichtungen werden in Fahrzeugwaschanlagen als sogenannte Tuchtrockner oder Tuchpolierer eingesetzt. Hierbei kann es jedoch auch vorkommen, daß der Tuchtrockner oder Tuchpolierer überhaupt nicht oder erst nach Beendigung anderer Behandlungsvorgänge in Betrieb genommen wird. Ersteres ist z. B. der Fall, wenn in einer Waschstraße die Vorrichtung, z. B. am Ende der Waschstraße, als Poliervorrichtung eingesetzt ist. Wenn ein Kunde sein Fahrzeug aus Kostengründen nicht polieren lassen will, muß das Fahrzeug trotzdem durch die ruhende Poliervorrichtung hindurch bewegt werden. Da sich hierbei die Streifen am Fahrzeug verfangen können und in unnötigerweise abgenützt werden, müssen sie durch geeignete Maßnahmen aus der Bewegungsbahn des Fahrzeuges entfernt werden. Bei Portalwaschanlagen, bei denen während der Fahrzeugbehandlung das Fahrzeug ruht und das Portal mehrfach in Fahrzeuglängsrichtung gegenüber diesem hin und her bewegt wird, können ebenfalls Probleme auftreten, wenn der Tuchtrockner oder Tuchpolierer nicht erst zu einem späteren Zeitpunkt oder überhaupt nicht benutzt werden soll. Wird beispielsweise das Portal, an dem der Tuchtrockner oder Tuchpolierer angebracht ist, auch zum Aufsprühen eines Waschmittels für die chemische Vorwäsche oder zum Aufbringen von Wachs verwendet, würden die vom Förderglied herunterhängenden Streifen über das Fahrzeug gezogen werden und durch das Waschwasser naß gemacht bzw. durch das Wachs verunreinigt werden. Probleme würden sich auch dann ergeben, wenn der Tuchtrockner in Kombination mit einer Abblaseinrichtung an einem Trocknungsportal verwendet werden würde. Bei Waschstraßen, bei denen das Fahrzeug durch ein endloses Förderband durch verschiedene Behandlungsstationen hindurch gezogen wird, ist es nämlich bekannt am Ende der Waschstraße zunächst eine Abblaseinrichtung anzuordnen, mit der der größte Teil des Wassers von der Fahrzeugoberfläche abgeblasen wird. Da es sich hierbei jedoch nicht vermeiden läßt, daß einige Wassertropfen auf der Fahrzeugoberfläche verbleiben, ist der Abblaseinrichtung ein Tuchtrockner nachgeschaltet um auch die letzten Tropfen von der Fahrzeugoberfläche zu entfernen. (Vergleiche Firmenschrift "WESUMAT softwash Waschstraßen-System 8808" der Firma WESUMAT Fahrzeugwaschanlagen GmbH, D-86156 Augsburg) Um die Beschädigung der Streifen, unnütze Abnutzung derselben und sonstige Beeinträchtigungen bei Nichtbenutzung zu vermeiden, ist es aus der DE-A-38 37 928 bekannt, eine mittelbar oder unmittelbar auf die Streifen einwirkende, mittels eines Stellmotors betätigbare Einrichtung vorzusehen, mit der die Streifen bei Nichtgebrauch derselben aus der Fahrzeugbewegungsbahn bringbar sind. In vorgenannter Druckschrift sind mehrere derartige Einrichtungen beschrieben, die jedoch einen erheblichen maschinellen Aufwand erfordern.

Der Erfindung liegt daher die Aufgabe zugrunde, eine Fahrzeug-Trocknungs- oder Poliervorrichtung der eingangs erwähnten Art zu schaffen, bei der die Streifen bei Nichtbenutzung der Vorrichtung ohne zusätzlichen maschinellen Aufwand aus der relativen Bewegungsbahn des Fahrzeuges gebracht werden können und die sich daher durch besonders einfachen Aufbau auszeichnet.

Dies wird nach der Erfindung dadurch erreicht, daß das Förderglied zwei streifenfreie Abschnitte aufweist, deren jeweilige Länge mindestens der größten Fahrzeugbreite entspricht und daß die beiden zwischen den streifenfreien Abschnitten liegenden Abschnitte des Fördergliedes mit so vielen Streifen besetzt sind, daß in Ruhestellung des Fördergliedes Streifen nur zu beiden Seiten des Fahrzeuges, außerhalb dessen relativer Bewegungsbahn herunterhängen und innerhalb der relativen Bewegungsbahn zwei in Relativbewegungsrichtungen des Fahrzeuges hintereinanderliegende, streifenfreie Lücken gebildet sind.

Die Erfindung geht also von der Idee aus, das Förderglied nicht gleichmäßig mit Streifen zu besetzen, sondern an dem endlosen Förderglied zwei streifenfreie und zwei dazwischenliegende, mit Streifen besetzte Abschnitte vorzusehen. Bei Nichtbenutzung der Trocknungs- oder Poliervorrichtung wird das Förderglied so stillgesetzt, daß sich seine mit Streifen besetzten Abschnitte im Bereich der Umlenkräder seitlich der Bewegungsbahn des Fahrzeuges und außerhalb derselben befinden und daß sich die beiden streifenfreien Abschnitte oberhalb der Bewegungsbahn des Fahrzeuges befinden und quer zu dessen Relativbewegungsrichtung erstrecken. Da die streifenfreien Abschnitte mindestens der größten Fahrzeugbreite entsprechen, entsteht unterhalb jedes streifenfreien Abschnittes eine streifenfreie Lücke durch die sich das Fahrzeug relativ zu der Trocknungs- oder Poliervorrichtung hindurch bewegen kann, ohne daß die in Ruhestellung seitlich und außerhalb der Bewegungsbahn befindlichen Streifen mit dem Fahrzeug in Kontakt kommen. Der Durchlauf des Fahrzeuges wird bei Nichtbenutzung der Trocknungs- und Poliervorrichtung nicht beeinträchtigt und umgekehrt können auch die Streifen die sonstigen Behandlungsvorgänge in einer Fahrzeugwaschanlage nicht beeinträchtigen. Insbesondere können die Streifen nicht in ungewollter Weise benetzt, mit Wachs verunreinigt oder mechanisch abgenutzt bzw. beschädigt werden. Da die Vorrichtung außer einem geeigneten Taster oder Endschalter, der das Förderband in der richtigen Lage stillsetzt, keine sonstigen mechanischen Einrichtungen benötigt, mit welchen die Streifen bei Nichtgebrauch aus der Fahrzeugbewegungsbahn gebracht werden können, wird auch ein einfacher Aufbau und eine größere Betriebssicherheit erreicht. Außerdem werden Wartungskosten für die Wartung einer solchen Einrichtung eingespart.

Eine besonders vorteilhafte Ausgestaltung der Erfindung besteht darin, daß das Förderglied und seine Umlenkräder an einem in Fahrzeuglängsrichtung hin und her fahrbaren Portal gelagert sind und daß in Bewegungsrichtung des Portals mit Abstand neben dem Förderglied eine Abblaseinrichtung und/oder eine Sprüheinrichtung zum Aufsprühen eines Behandlungsmittels auf das Fahrzeug angeordnet ist. Gerade bei Portalwaschanlagen, bei denen ein oder auch mehrere Portale mehrfach über das Fahrzeug hin und her bewegt werden, um nacheinander die verschiedenen Behandlungsvorgänge durchführen zu können, kommt es nämlich darauf an, daß die Streifen der Trocknungs- oder Poliervorrichtung nicht in die Bewegungsbahn des Fahrzeuges hängen, wenn sie nicht gebraucht werden.

Weitere vorteilhafte Ausgestaltungen der Erfindung sind in den übrigen Unteransprüchen gekennzeichnet.

Die Erfindung wird in Folgendem anhand von den in der Zeichnung dargestellten Ausführungsbeispielen näher beschrieben. Es zeigen:

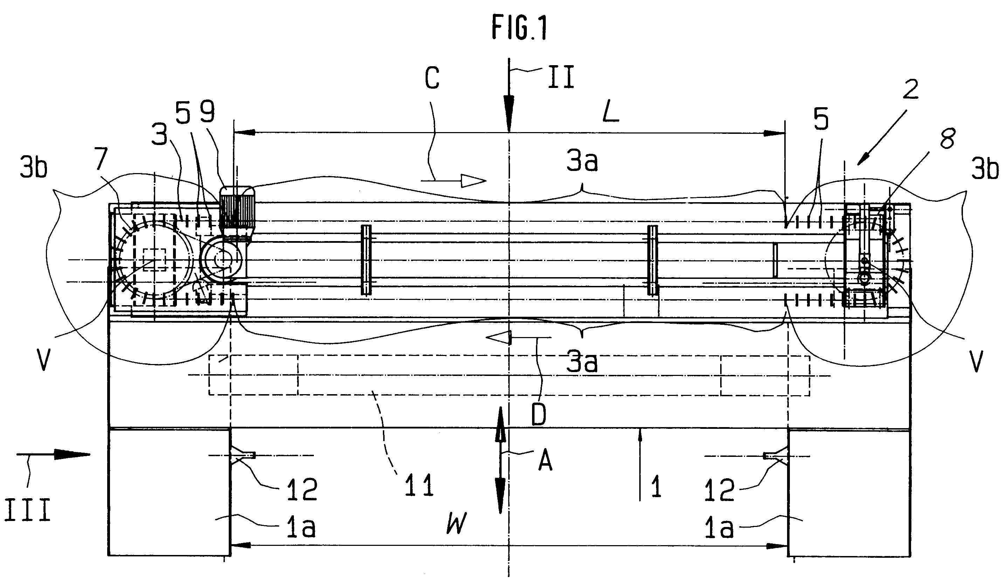

- Figur 1: eine Draufsicht auf eine Portal-Trocknungsvorrichtung,

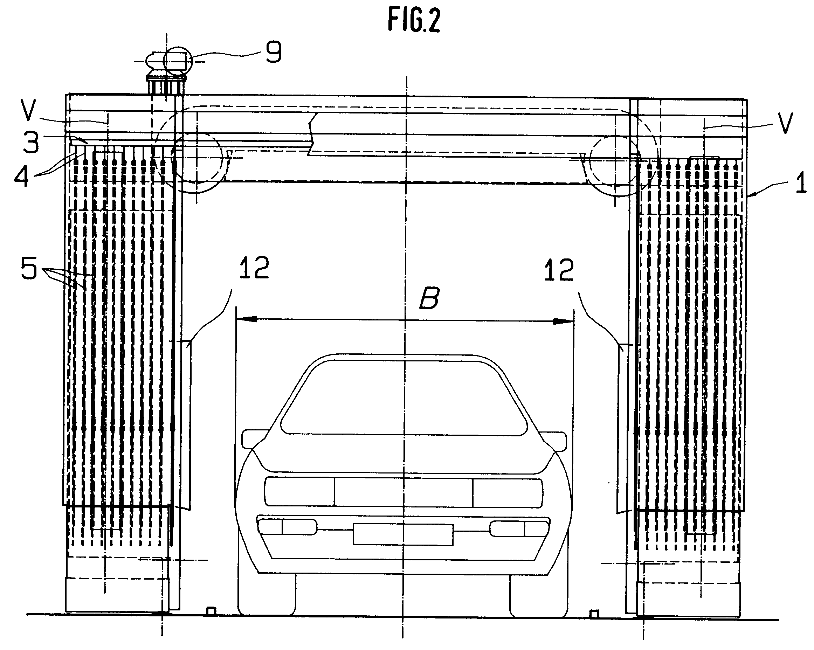

- Figur 2: eine Stirnansicht derselben in Richtung II der Figur 1,

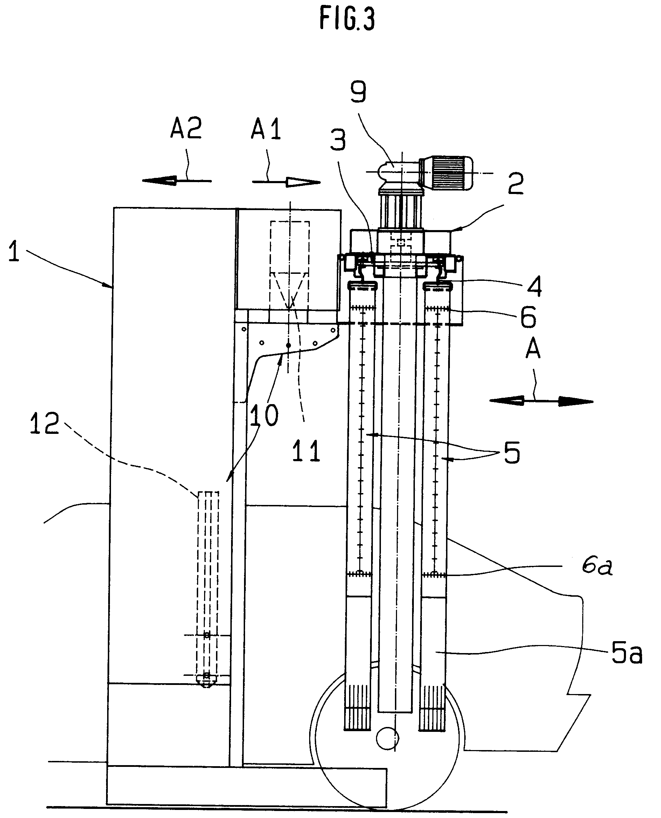

- Figur 3: eine Seitenansicht derselben in Richtung III der Figur 1,
- Figur 4: eine Draufsicht auf ein zweites Ausführungsbeispiel.

Die Erfindung wird anhand von Portal-Trocknungsvorrich tungen näher erläutert, für die die erfindungsgemäße Ausge staltung besonders geeignet ist. Das Portal 1 ist in Richtung der Fahrzeuglängsrichtung A horizontal hin und her fahrbar. Während der Behandlung, d. h. während des Waschens bzw. Trocknens ruht das Fahrzeug, so daß die Relativbewegung zwischen Fahrzeug und Portal 1 allein durch die Bewegung des Portals 1 bewirkt wird. An dem Portal 1 ist ein Tuchtrockner 2 angeordnet, dessen wesentliche Bestandteile ansich bekannt sind. Dieser weist in einer horizontalen Ebene oberhalb der Bewegungsbahn des Fahrzeuges ein endloses Förderglied 3 auf, welches in der Regel als Förderkette ausgebildet ist. An diesem Förderglied 3 sind mehrere Bügel 4 befestigt, von denen jeder zur Aufnahme eines frei nach unten hängenden Streifens 5 dient. Dieser schmale Streifen 5 kann ganz oder teilweise aus saugfähigem Material, wie Textilien, Schaumstoff, Leder, lederartigem Material oder auch Fell bestehen. Damit die Streifen bei Beschädigung im Bedarfsfall leicht ausgetauscht werden können, weist jeder Streifen im Bereich des Bügels 4 einen Klettverschluß 6 auf. Es ist auch möglich, an dem unteren Bereich des Streifens 5 einen weiteren Klettverschluß 6a vorzusehen, so daß das untere Teil 5a jedes Streifens auch für sich alleine ausgetauscht werden kann. Das endlose Förderglied 3 ist an den beiden Seiten des Portals 1 über je ein Umlenkrad 7, 8 geführt, wobei das Umlenkrad 7 durch den Motor 9 antreibbar ist. Die Umlenkräder 7, 8 drehen sich um vertikale Achsen V.

Während normalerweise bei Tuchtrocknern dieser Art die Bügel bzw. Streifen gleichmäßig auf der ganzen Länge des biegsamen, endlosen Fördergliedes 3 verteilt sind, sieht die Erfindung eine ungleichmäßige Verteilung vor. Das Förderglied 3 weist zwei Abschnitte 3a auf, an denen keine Bügel bzw. Streifen angeordnet sind.

Diese Abschnitte 3a werden als "streifenfreie" Abschnitte bezeichnet. Zwischen den beiden streifenfreien Abschnitten 3a weist das Förderglied 3 jeweils mit Streifen besetzte Abschnitte 3b auf. Die Bügel 4 und die Streifen 5 sind also nur an den Abschnitten 3b angeordnet. Die Länge L der streifenfreien Abschnitte 3a muß größer sein als die größte Breite B des größten mit der Vorrichtung zu trocknenden Fahrzeuges. Die Länge L entspricht vorzugsweise etwa der lichten Weite W des Portals 1.

In Bewegungsrichtung A des Portals ist mit Abstand neben dem Förderglied 3 eine Abblaseinrichtung 10 vorgesehen. Diese besteht aus einer horizontalen sich quer zur Fahrzeuglängsrichtung bzw. quer zur Bewegungsrichtung A des Portals 1 erstreckenden Blasdüse 11 und je einer an jedem Ständer 1a des Portals 1 angeordneten vertikalen Blasdüse 12. Die horizontale Blasdüse 11 kann höhenbeweglich gelagert sein und ihre Höhenbewegung kann zweckmäßig von einer die Fahrzeugkontur abtastenden Tastvorrichtung gesteuert werden.

Nach dem Waschen des Fahrzeuges mittels eines nicht dargestellten Waschportals kann das Fahrzeug mit der erfindungsgemäßen Trocknungsvorrichtung getrocknet werden. Das endlose Förderglied 3 wurde bei dem vorhergehenden Trocknungsvorgang so stillgesetzt, wie es in den Zeichnungen dargestellt ist. In dieser Ruhestellung des Fördergliedes befinden sich die beiden streifenfreien Abschnitte 3a oberhalb des Durchfahrtsbereiches des Portals, d. h. oberhalb der relativen Bewegungsbahn des Fahrzeuges gegenüber dem Portal. Durch die streifenfreien Abschnitte 3a des Fördergliedes 3 werden auf diese Weise zwei in Bewegungsrichtung A des Portals 1, d. h. in Relativbewegungsrichtung des Fahrzeuges gegenüber dem Portal hintereinanderliegende Lücken gebildet, deren Breite der Länge L der streifenfreien Abschnitte 3a entspricht. Die mit Streifen 5 besetzten Abschnitte 3b des Fördergliedes 3 befinden sich in Ruhestellung desselben an beiden Seiten des Portals im Bereich der durch die Umlenkräder 7, 8 gebildeten Umlenkstellen außerhalb der relativen Bewegungsbahn des Fahrzeuges. In dieser Ruhestellung des Fördergliedes 3 können also die Streifen 5 nicht mit dem Fahrzeug in Berührung kommen. Um die Trocknung des Fahrzeuges zu bewirken, wird das Portal zunächst in Richtung A1 von rechts nach links über das Fahrzeug hinweg bewegt und hierbei der größte Teil des auf der Fahrzeugoberfläche befindlichen Wassers von den Blasdüsen 11, 12 abgeblasen. Nachdem das Portal 1 über das ganze Fahrzeug hinweg bewegt wurde, wird das Gebläse stillgesetzt und die Fahrtrichtung des Portals 1 umgekehrt. Während sich nun das Portal 1 in Richtung A2 von links nach rechts über das Fahrzeug bewegt, wird das Föderglied 3 mittels des Motors 9 in Richtung C bzw. D angetrieben. Hierdurch werden während der Portalbewegung in Richtung A2 die Streifen 5 in Richtung C bzw. D bewegt. Sie werden hierbei über die Fahrzeugoberfläche gezogen und saugen dabei die auf der Fahrzeugoberfläche befindlichen restlichen Tropfen auf. Da die Querbewegung der Streifen in Richtung C und D von der Längsbewegung des Portals in Richtung A2 überlagert wird, werden die Streifen 5 diagonal über die Fahrzeugoberfläche gezogen. Nachdem das Portal in Richtung A2 vollständig über das Fahrzeug hinweg bewegt wurde, wird der Motor 9 über einen geeigneten Endschalter oder dergleichen so stillgesetzt, daß sich die beiden streifenfreien Abschnitte 3a in der in den Zeichnungen dargestellten Lage oberhalb des Durchfahrtsbereiches des Portals befinden und die streifenbesetzten Abschnitte 3b an beiden Seiten des Portals angeordnet sind.

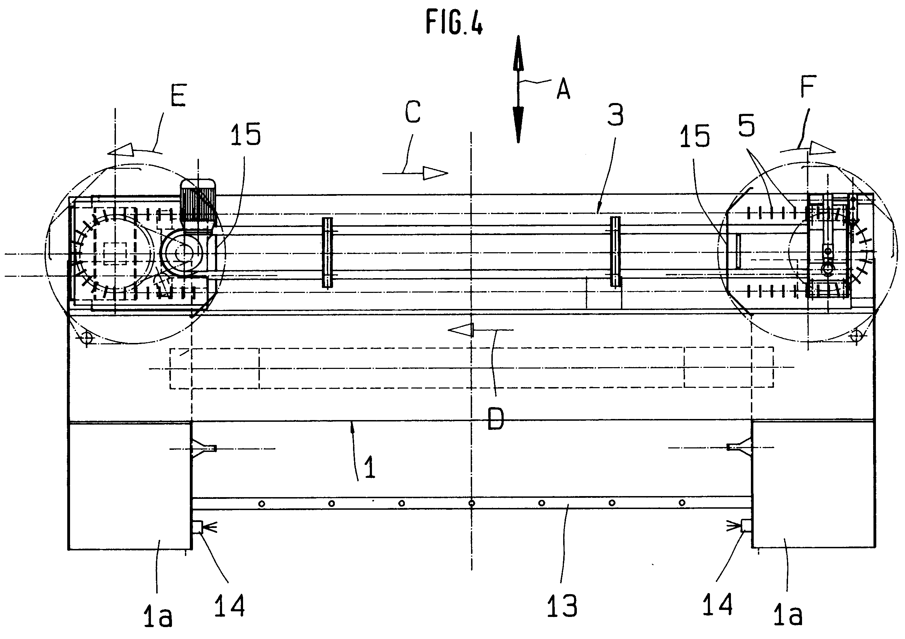

Wenn die Portal-Trocknungsvorrichtung auch zum Aufbringen von flüssigen Behandlungsmitteln verwendet werden soll, beispielsweise zum Aufbringen eines Waschmittels für die chemische Vorwäsche oder zum Aufbringen von flüssigem Wachs, dann ist gemäß Figur 4 an dem Portal ein Sprühbogen 13, 14, bestehend aus einem horizontalen Teil 13 und zwei vertikalen Teilen 14, angeordnet. Damit nun die Streifen 5 durch das Behandlungsmittel nicht benetzt und/oder verunreinigt werden, ist es zweckmäßig an jeder Seite des Portals 1 einen beweglichen Schirm 15 vorzusehen, der bei Betrieb der Sprüheinrichtung 13, 14 in Ruhestellung des Fördergliedes 3 so verschwenkbar ist, daß er gemäß Figur 4 die Streifen 5 an der Innenseite des Portals 1 abdeckt. Jeder Schirm 15 ist zweckmäßig um eine vertikale Achse schwenkbar und kann mittels eines geeigneten Stellmotors in Richtung E bzw. F nach außen geschwenkt werden, wenn der Tuchtrockner 2 in Betrieb genommen werden soll.

Die Erfindung kann auch bei Waschstraßen, bei denen das Fahrzeug durch die stationären Behandlungsstationen gezogen wird mit Vorteil eingesetzt werden, beispielsweise am Ende der Waschstraße als Poliervorrichtung. Normalerweise ist dann das Förderglied 3 in Ruhestellung angeordnet, so daß sich die streifenfreien Abschnitte 3a oberhalb der Bewegungsbahn des Fahrzeuges befinden und im Bewegungsbereich des Fahrzeuges die beiden vorerwähnten Lücken vorhanden sind. Das Fahrzeug kann dann die Poliervorrichtung passieren, ohne daß die Streifen vom Fahrzeug berührt werden. Wenn jedoch der Kunde sein Fahrzeug poliert haben will und hierfür auch bezahlt hat, dann wird das Förderglied 3 in Bewegung gesetzt während das Fahrzeug durch die Poliervorrichtung hindurch gezogen wird. Die Streifen werden dann während des Poliervorganges in der vorher beschriebenen Weise diagonal über die Fahrzeugoberfläche gezogen.

## Patentansprüche

1. Fahrzeug-Trocknungs- oder Poliervorrichtung mit einer das Fahrzeug relativ zur Vorrichtung bewegenden Einrichtung, mit einem in horizontaler Ebene oberhalb der Bewegungsbahn des Fahrzeuges über mehrere sich um vertikale Achsen drehende, an beiden Längsseiten der Vorrichtung angeordnete Umlenkräder geführtes, biegsames, antreibbares endloses Förderglied (3) und mit einer Vielzahl von mit diesem verbundenen, senkrecht herunterhängenden schmalen Streifen (5) aus saugfähigem Material, wie Textilien, Schaumstoff, Leder und lederähnlichem Kunststoff, die mittels des Fördergliedes quer zur relativen Bewegungsbahn des Fahrzeuges bewegbar sind, **dadurch gekennzeichnet**, daß das Förderglied (3) zwei streifenfreie Abschnitte (3a) aufweist, deren jeweilige Länge (L) mindestens der größten Fahrzeugbreite (B) entspricht, und daß die beiden zwischen den streifenfreien Abschnitten (3a) liegenden Abschnitte (3b) des Fördergliedes (3) mit so vielen Streifen (5) besetzt sind, daß in Ruhestellung des Fördergliedes (3) Streifen nur zu beiden Seiten des Fahrzeuges, außerhalb dessen relativen Bewegungsbahn herunter hängen und innerhalb der relativen Bewegungsbahn zwei in Relativbewegungsrichtung (A) des Fahrzeuges hintereinanderliegenden, streifenfreie Lücken gebildet sind.

2. Vorrichtung nach Anspruch 1, **dadurch gekennzeichnet**, daß das Förderglied (3) und seine Umlenkräder (7, 8) an einem in Fahrzeuglängsrichtung (A) hin- und her - fahrbaren Portal (1) gelagert sind und daß in Bewegungsrichtung (A1, A2) des Portals (1) mit Abstand dem Förderglied (3) eine Abblasvorrichtung und/oder eine Sprüheinrichtung (13, 14) zum Aufsprühen eines Behandlungsmittels auf das Fahrzeug angeordnet ist.

3. Vorrichtung nach Anspruch 2, **dadurch gekennzeichnet**, daß die Abblaseinrichtung (10) eine horizontale Blasdüse (11) und an beiden Seiten des Portals (1) je eine vertikale Blasdüse (12) aufweist.

4. Vorrichtung nach Anspruch 3, **dadurch gekennzeichnet**, daß die horizontale Blasdüse (11) in Abhängigkeit von einer die Fahrzeugkontur abtastenden Tastvorrichtung heb- und senkbar ist.

5. Vorrichtung nach einem der Ansprüche 2 - 4, **dadurch gekennzeichnet**, daß an beiden Seiten des Portals (1) je ein beweglicher Schirm (15) vorgesehen ist, mit welchem die Streifen (5) in Ruhestellung des Fördergliedes (3) an der Portalinnenseite abdeckbar sind.

6. Vorrichtung nach Anspruch 5, **dadurch gekennzeichnet**, daß der Schirm (15) um eine vertikale Achse schwenkbar ist.

## Claims

1. A vehicle drying or polishing apparatus with a device moving the vehicle relative to the apparatus, a flexible, drivable, endless conveyor member guided in a horizontal plane above the path of the vehicle by a plurality of deviating wheels arranged on both longitudinal sides of the apparatus and rotating about vertical axes, and a plurality of narrow strips of absorbent material, such as textiles, foam material, leather and leather-like plastics, connected to the conveyor member and hanging down vertically therefrom and which are movable by means of the conveyor member transverse to the path of relative movement of the vehicle, characterized in that the conveyor member (3) has two strip-free sections (3a) whose respective lengths (L) correspond at least to the greatest vehicle width, and in that the two sections (3b) of the conveyor member (3) lying between the strip-free sections (3a) are equipped with many strips (5) such that, in the rest position of the conveyor member (3) strips only hang down on the two sides of the vehicle, outside its path of relative movement, and within the path of relative movement two strip-free gaps are formed, lying one behind the other in the direction of relative movement (A) of the vehicle.

2. Apparatus according to claim 1, characterized in that the conveyor member (3) and its deviating wheels (7, 8) are mounted in a gantry (1) which can be driven to and fro in the longitudinal direction of the vehicle and in that a blower device (11, 12) and/or a spray device (13, 14) for spraying a treatment medium on to the vehicle is arranged spaced from the conveyor member (3) in the direction of movement (A1, A2) of the gantry (1).

3. Apparatus according to claim 2, characterized in that the blower device (10) has a horizontal blower nozzle (11) and a vertical blower nozzle (12) on each of the two sides of the gantry (1).

4. Apparatus according to claim 3, characterized in that the horizontal blower nozzle (11) can be raised and lowered in dependence on a sensing device sensing the shape of the vehicle.

5. Apparatus according to any of claims 2 to 4, characterized in that a movable shield (15) is provided on each of the two sides of the gantry (1), with which the strips (5) can be covered on the inside of the gantry in the rest position of the conveyor member (3).

6. Apparatus according to claim 5, characterized in that the shield (15) can pivot about a vertical axis.

## Revendications

1. Dispositif de séchage ou de lustrage de véhicules, comprenant un mécanisme qui déplace le véhicule par rapport au dispositif, comprenant un organe de déplacement sans fin et flexible (3) qui peut être entraîné et qui est guidé dans un plan horizontal au-dessus du trajet de deplacement du véhicule sur plusieurs roues de renvoi, celles-ci tournant autour d'axes verticaux en étant disposées des deux côtés du dispositif dans le sens longitudinal, et comprenant une pluralité de bandes étroites (5) qui sont reliées a cet organe, qui pendent verticalement, qui sont constituées par une matière absorbante, comme des matières textiles, une matière alvéolaire, du cuir et une matière plastique analogue à du cuir, et qui peuvent être déplacées au moyen de l'organe de déplacement dans le sens transversal par rapport au trajet de déplacement relatif du véhicule, caractérisé par le fait que l'organe de déplacement (3) présente deux parties dépourvues de bandes (3a) dont la longueur respective (L) correspond au moins à la plus grande largeur (B) du véhicule, et par le fait que les deux parties (3b) de l'organe de déplacement (3) qui sont situées entre les parties dépourvues de bandes (3a) sont pourvues d'un nombre de bandes (5) tel que, dans la position de repos de l'organe de déplacement (3), des bandes ne pendent que des deux côtés du véhicule, à l'extérieur du trajet de déplacement relatif de celui-ci, et qu'à l'intérieur du trajet de déplacement relatif, il se forme deux vides dépourvus de bandes qui sont situés l'un derrière l'autre dans la direction de déplacement relatif (A) du véhicule.

2. Dispositif selon la revendication 1, caractérisé par le fait que l'organe de déplacement (3) et ses roues de renvoi (7, 8) sont montés sur un portique (1) qui peut être déplacé en va-et-vient dans la direction longitudinale (A) du véhicule, et par le fait qu'un dispositif de soufflage et/ou un dispositif de pulvérisation (13, 14) est disposé dans la direction de déplacement (A1, A2) du portique (1) à distance de l'organe de déplacement (3) en vue de pulvériser un agent de traitement sur le véhicule.

3. Dispositif selon la revendication 2, caractérisé par le fait que le dispositif de soufflage (10) comporte une buse de soufflage horizontale (11), ainsi qu'uns buse de soufflage verticale (12) sur chacun des deux côtés du portique (1).

4. Dispositif selon la revendication 3, caractérisé par le fait que la buse de soufflage horizontale (11) peut être levée ou abaissée en fonction d'un dispositif de palpage qui explore le contour du véhicule.

5. Dispositif selon l'une des revendications 2 à 4, caractérisé par le fait qu'il est prévu sur chacun des deux côtés du portique (1) un écran mobile (15) par lequel les bandes (5) peuvent être recouvertes sur le côté intérieur du portique dans la position de repos de l'organe de déplacement (3).

6. Dispositif selon la revendication 5, caractérisé par le fait que l'écran (15) peut pivoter autour d'un axe vertical.
